# EUROPEAN PATENT APPLICATION

(11) **EP 4 746 089 A1**
(43) Date of publication of application: **20.05.2026**
(21) Application number: 24863026.1
(22) Date of filing: 31.07.2024
(51) Int. Cl.: H01M 10/04, B65G 47/90, G01N 21/84

(54) **UNIT CELL STACKING APPARATUS AND UNIT CELL STACKING METHOD**

(30) Priority: 06.09.2023 KR 20230118518
(71) Applicant: LG Energy Solution, Ltd., Seoul 07335 (KR)
(72) Inventor: GWON, Yeong Tae, Daejeon 34122 (KR)
(74) Representative: Goddar, Heinz J.
(86) International application number: PCT/KR2024/011276
(87) International publication number: WO 2025/053444

(57) **Abstract**

A unit cell stacking device according to an embodiment of the present disclosure may include a seating plate on which a plurality of unit cells are sequentially seated so as to be stacked on each other, a guide unit connected to the seating plate and guiding a downward movement of the seating plate, a measurement unit measuring a position information of the guide unit and a position information of a unit cell, and a stacking unit stacking the unit cell on the seating plate according to the position information of the guide unit and the position information of the unit cell measured by the measurement unit.

## Description

### TECHNICAL FIELD

### CROSS-REFERENCE TO RELATED APPLICATIONS

The present application claims priority to Korean Patent Application No. 10-2023-0118518 filed on September 6, 2023 in the Republic of Korea, the disclosures of which are incorporated herein by reference.

### TECHNICAL FIELD

The present disclosure relates to a device and method for aligning and stacking a plurality of unit cells for a secondary battery.

### BACKGROUND ART

In order to solve the environmental pollution caused by the use of petroleum resources and the shortage problem of energy sources due to the depletion of petroleum resources, research and development on power generation based on eco-friendly energy sources are in progress. In particular, research on secondary batteries with high utilization due to repeated charge/discharge is being actively conducted, and various aspects such as materials, structures, processes, and stability of secondary batteries are being studied.

In general, types of secondary batteries include nickel cadmium batteries, nickel hydrogen batteries, lithium-ion batteries, and lithium-ion polymer batteries. These secondary batteries are applied and used not only in small products such as digital cameras, P-DVDs, MP3Ps, mobile phones, PDAs, portable game devices, power tools, and E-bikes, but also in large products requiring high power such as electric vehicles or hybrid vehicles, in power storage devices that store surplus generated power or renewable energy, and in power storage devices for backup.

To manufacture such a secondary battery, an electrode active material slurry is first applied to a positive electrode current collector and a negative electrode current collector to manufacture a positive electrode and a negative electrode, which are then stacked on both sides of a separator to form an electrode assembly having a predetermined shape. And, the electrode assembly is accommodated in a battery case, an electrolyte is injected, and then the battery case is sealed.

In the process of manufacturing an electrode assembly through a stacking process of positive electrodes and negative electrodes, various types of electrode assemblies are manufactured depending on the type of unit cell. For example, a bi-cell is a unit cell having the same type of electrode positioned on both surfaces in a structure in which at least one positive electrode and at least one negative electrode are stacked with a separator interposed therebetween, and a mono-cell is a unit cell having different types of electrodes positioned on both surfaces in a structure in which at least one positive electrode and at least one negative electrode are stacked with a separator interposed therebetween, or the stacking may be performed simply by interposing a separator between the positive electrode and the negative electrode.

However, in the process of stacking a plurality of unit cells, there is a problem that a plurality of unit cells are stacked in an improperly aligned state. When a plurality of unit cells are stacked in an improperly aligned state to form an electrode assembly, there is a problem of degrading the yield and performance of the secondary battery.

A technology for stacking a plurality of unit cells more precisely has been introduced by stacking unit cells by measuring and comparing the positions of the unit cells and the positions of the parts where the unit cells are stacked, but it is still difficult to stack the unit cells in the correct positions. Therefore, there is a need for a unit cell stacking device capable of stacking unit cells more precisely.

### SUMMARY

### TECHNICAL PROBLEM

The present disclosure is directed to providing a unit cell stacking device in which the position of a part serving as a reference for determining the stacking position of the unit cells is maintained even if a plurality of unit cells are stacked on a seating plate.

The present disclosure is also directed to providing a unit cell stacking device that readjusts the stacking operation when the unit cells are not stacked in the correct position.

### TECHNICAL SOLUTION

A unit cell stacking device according to an embodiment of the present disclosure may include a seating plate on which a plurality of unit cells are sequentially seated so as to be stacked on each other, a guide unit connected to the seating plate and guiding a downward movement of the seating plate, a measurement unit measuring a position information of the guide unit and a position information of a unit cell, and a stacking unit stacking the unit cells on the seating plate according to the position information of the guide unit and the position information of the unit cell measured by the measurement unit.

The seating plate may include a connecting hole formed through each corner portion, and the guide unit may be connected through the connecting hole.

As the plurality of unit cells are stacked on the seating plate, the seating plate may move downward along the guide unit.

The guide unit may be formed as a plurality so as to be disposed at each corner portion of the seating plate, and the measurement unit may measure a first reference point at which a plurality of imaginary lines connecting the plurality of guide units intersect and may measure a second reference point, which is a center point of the unit cell located at an uppermost end among the plurality of unit cells stacked on each other.

The stacking unit may stack the unit cells so that the first reference point and the second reference point coincide.

The unit cell stacking device according to an embodiment of the present disclosure may further include a control unit that controls an operation of the stacking unit according to the position information of the guide unit and the position information of the unit cell measured by the measurement unit.

The control unit may determine whether the first reference point and the second reference point coincide.

The control unit may readjust a stacking operation of the stacking unit when it determines that the first reference point and the second reference point do not coincide.

As the seating plate moves downward along the guide unit, the guide unit may be formed to protrude upward from the seating plate.

The stacking unit may sequentially stack the plurality of unit cells on the seating plate so that a top surface height of the unit cell located at an uppermost end among the plurality of unit cells and a top surface height of the guide unit are the same.

The top surface height of the guide unit may be maintained constant.

The connecting hole may be formed through along a stacking direction of the unit cells, and the seating plate may move along the guide unit in a direction parallel to the stacking direction of the unit cells.

The guide unit may be formed as a plurality , and the center position of the plurality of guide units and the center position of the unit cells stacked on the seating plate may be the same.

A unit cell stacking method according to another embodiment of the present disclosure may include a stacking step in which as unit cells are stacked in plurality on a seating plate by a stacking unit, the seating plate moves downward along a guide unit connected though the seating plate, a measurement step in which a measurement unit measures a position information of the guide unit and a position information of a unit cell, and a control step in which a control unit controls an operation of the stacking unit according to the position information of the guide unit and the position information of the unit cell measured in the measurement step.

In the stacking step, the seating plate may move downward along the guide units through connecting hole through which the guide unit is connected at each corner portion.

In the measurement step, the measurement unit may measure a first reference point at which a plurality of imaginary lines connecting the plurality of guide units intersect, and may measure a second reference point, which is a center point of the unit cell located at an uppermost end among the plurality of unit cells stacked on each other.

The control step may include a judgment step in which the control unit determines whether the first reference point and the second reference point coincide, and an adjustment step in which the control unit readjusts a stacking operation of the stacking unit when the control unit determines that the first reference point and the second reference point do not coincide in the judgment step.

### ADVANTAGEOUS EFFECTS

According to a preferred embodiment of the present disclosure, even if a plurality of unit cells are stacked on a seating plate, the position of a part serving as a reference for determining the stacking position of the unit cells is maintained, so that the unit cells may be stacked more precisely even if the seating plate descends according to the stacking of the unit cells.

According to a preferred embodiment of the present disclosure, by readjusting the stacking operation when the unit cells are not stacked in the correct position, the unit cells may be stacked more precisely.

In addition, effects that may be easily predicted by those skilled in the art from configurations according to preferred embodiments of the present disclosure may be included.

### BRIEF DESCRIPTION OF THE DRAWINGS

The accompanying drawings illustrate preferred embodiments of the present disclosure and together with the following detailed description, serve to provide a further understanding of the technical aspect of the present disclosure, and thus, the present disclosure should not be construed as being limited to the drawings.
FIG. 1 is a perspective view of a state in which unit cells are seated in a unit cell stacking device according to a comparative embodiment.
FIG. 2 is a schematic view of a state in which the position of a unit cell is measured by a unit cell stacking device according to a comparative embodiment.
FIG. 3 is a perspective view of a state in which a plurality of unit cells are stacked in a unit cell stacking device according to a comparative embodiment.
FIG. 4 is a schematic view of a state in which the position of a plurality of stacked unit cells is measured by a unit cell stacking device according to a comparative embodiment.
FIG. 5 is a perspective view of a unit cell stacking device according to an embodiment of the present disclosure.
FIG. 6 is a perspective view of a state in which a plurality of unit cells are stacked in a unit cell stacking device according to an embodiment of the present disclosure.
FIG. 7 is a block diagram of a unit cell stacking device according to an embodiment of the present disclosure.
FIG. 8 is a plan view of a unit cell stacking device according to an embodiment of the present disclosure.
FIG. 9 is a flow chart of a unit cell stacking method according to another embodiment of the present disclosure.

### DETAILED DESCRIPTION

Hereinafter, preferred embodiments of the present disclosure will be described in sufficient detail with reference to the accompanying drawings to enable those having ordinary skill in the technical field pertaining to the present disclosure to easily carry out the present disclosure. However, the present disclosure may be embodied in many different forms and is not limited or restricted by the following embodiments.

To clearly describe the present disclosure, an irrelevant description or a detailed description of related known technology that may unnecessarily obscure the gist of the present disclosure is omitted, and in affixing the reference numerals to the elements in each drawing, the identical or similar reference numerals are affixed to the identical or similar elements throughout the present disclosure.

Additionally, it should be understood that the terms or words used in the present disclosure and the appended claims should not be construed as limited to general and dictionary meanings, but rather interpreted based on the meanings and concepts corresponding to the technical aspect of the present disclosure on the basis of the principle that the inventor is allowed to define terms appropriately for the best explanation.

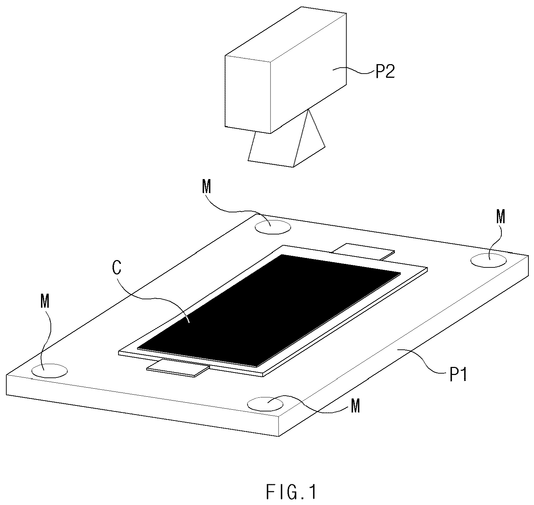

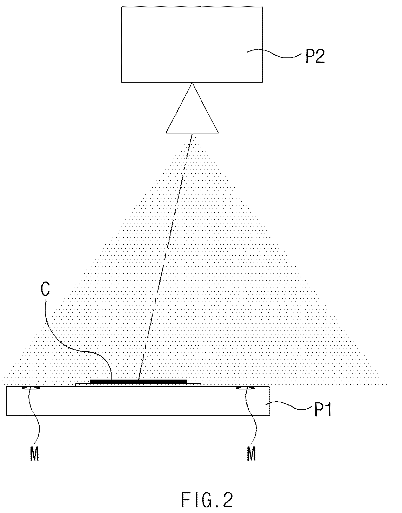

FIG. 1 is a perspective view of a state in which unit cells are seated in a unit cell stacking device according to a comparative embodiment, and FIG. 2 is a schematic view of a state in which the position of a unit cell is measured by a unit cell stacking device according to a comparative embodiment.

Referring to FIGS. 1 and 2, a unit cell stacking device according to a comparative embodiment may measure the alignment of the unit cell C to seat the unit cell. For example, a unit cell measuring device according to a comparative embodiment may include a plate P1 on which the unit cell C is seated, a measuring unit P2 that measures the position of the unit cell C and the position of the plate P1, and a stacking unit (not shown) that stacks a plurality of unit cells C on the plate P1.

Specifically, the stacking unit (not shown) may grip the unit cell C located in a different space and move it to the upper side of the plate P1, and then may seat the unit cell C on the top surface of the plate P1 while releasing the grip of the unit cell C.

In this case, the measuring unit P2 may measure the position information of the unit cell C. For example, the measuring unit P2 may measure the center point information of the unit cell C by sensing the appearance of the unit cell C and specifying the center point of the unit cell C.

Additionally, the measuring unit P2 may measure the position information of the plate P1. For example, a plurality of vision marks M are formed at each corner of the plate P1, and the measuring unit P2 specifies a point at which imaginary lines connecting the plurality of vision marks M intersect as the center of the plate P1, so that the center position of the plate P1 may be measured.

Based on the center position information of the unit cell C and the center position of the plate P1 measured by the measuring unit P2, the stacking unit (not shown) may seat the unit cell C on the top surface of the plate P1. Specifically, the stacking unit (not shown) may seat the unit cell C on the top surface of the plate P1 so that the center position of the unit cell C and the center position of the plate P1 coincide.

The unit cell C is seated on the plate P1 based on this operation principle, but when a plurality of unit cells C are stacked, the following problems may occur.

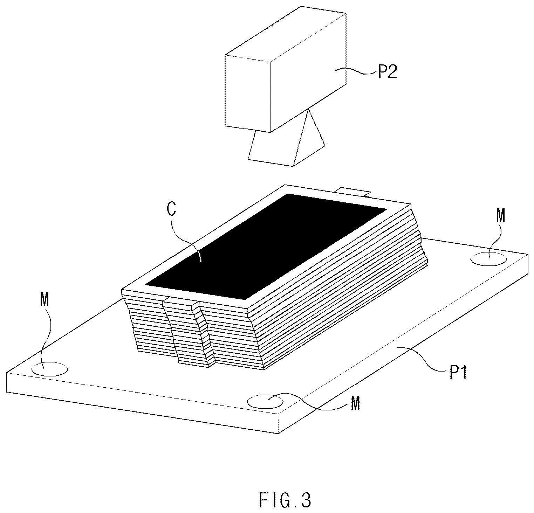

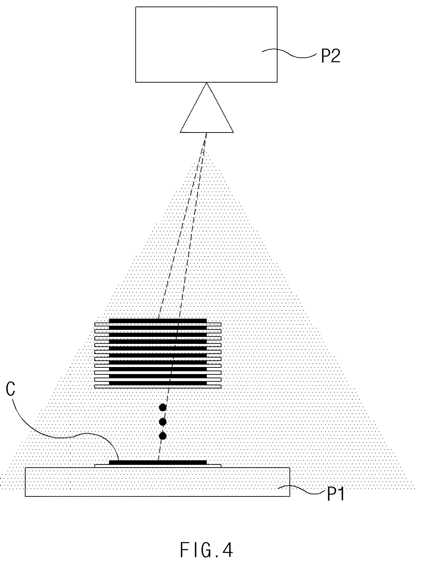

FIG. 3 is a perspective view of a state in which a plurality of unit cells are stacked in a unit cell stacking device according to a comparative embodiment, and FIG. 4 is a schematic view of a state in which the position of a plurality of stacked unit cells is measured by a unit cell stacking device according to a comparative embodiment.

Referring to FIGS. 3 and 4, a plurality of unit cells C may be stacked on the plate P1. In the process of stacking a plurality of unit cells C, the plate P1 may gradually move downward. Additionally, in the process of stacking a plurality of unit cells C, the unit cells C may be gradually stacked.

As described above, the measuring unit P2 measures the center position of the unit cell C and the center position of the plate P1, but as a plurality of unit cells C are stacked, the measurement accuracy of the measuring unit P2 may decrease.

For example, when the measuring unit P2 measures the center position of the unit cell C, the measuring unit P2 may measure the center position information of the unit cell C located at the uppermost end among the plurality of unit cells C. When the measuring unit P2 measures the center position of the plate P1, it may measure the center point of the plate P1, i.e., the center point position of the unit cell C located at the lowermost side among the plurality of unit cells C.

That is, as the unit cells C are stacked in plurality, there may be a distortion between the center position of the unit cell C and the center position of the plate P1 measured by the measuring unit P2. This is because a height difference occurs between the center position of the unit cell C and the center position of the plate P1, and the measurement range of the measuring unit P2 is formed by an angle of view.

Due to this, when viewed from above, the position where the stacking unit (not shown) intends to stack the unit cell C and the position where the unit cell C should be actually stacked are different, which may cause a problem that the plurality of unit cells C may not be stacked as previously designed.

In order to prevent such a problem and to stack the unit cells C more precisely, the following unit cell stacking device 1 according to an embodiment of the present disclosure may be utilized. Hereinafter, a unit cell stacking device 1 according to an embodiment of the present disclosure will be described.

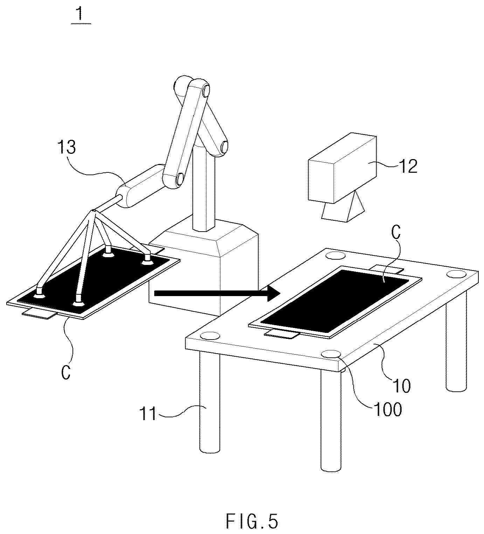

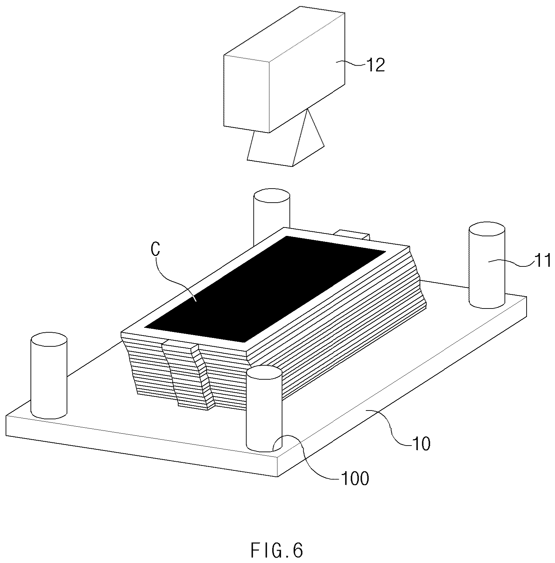

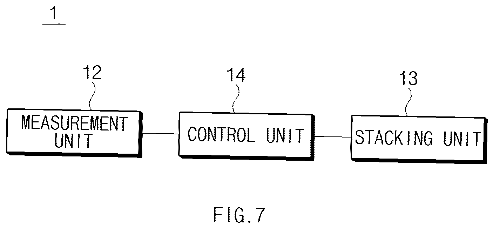

FIG. 5 is a perspective view of a unit cell stacking device 1 according to an embodiment of the present disclosure, FIG. 6 is a perspective view of a state in which a plurality of unit cells C are stacked in a unit cell stacking device 1 according to an embodiment of the present disclosure, and FIG. 7 is a block diagram of a unit cell stacking device 1 according to an embodiment of the present disclosure.

Referring to FIGS. 5 to 7, the unit cell stacking device 1 according to an embodiment of the present disclosure may sequentially stack a plurality of unit cells C. Additionally, the unit cell stacking device 1 may stack the unit cells C at a more accurate position based on the position information of the unit cells C and the position information of the part where the unit cell Cs are stacked.

For example, the unit cell stacking device 1 may compare the position of the unit cell C with the position of the part where the unit cell C is stacked, and may adjust the stacking operation to stack the unit cell C in the correct position when the unit cell C is not stacked in the correct position.

In this case, as the unit cells C are stacked in plurality, the part where the unit cells C are stacked descends, and the unit cell stacking device 1 may perform the correct stacking operation in the same manner.

Specifically, the unit cell stacking device 1 may include a seating plate 10, a guide unit 11, a measurement unit 12, and a stacking unit 13.

A plurality of unit cells C may be sequentially seated on the seating plate 10 so as to be stacked on each other. For example, the seating plate 10 may be formed in the shape of a plate forming a flat surface, and a plurality of unit cells C may be sequentially stacked on the top surface of the seating plate 10.

The guide unit 11 is connected to the seating plate 10 and may guide the downward movement of the seating plate 10. For example, the seating plate 10 may include the connecting hole 100 formed through each corner portion, and the guide unit 11 may be connected through the connecting hole 100.

According to this structure, in a state where the guide unit 11 is positioned through the connecting hole 100, the seating plate 10 may move downward along the guide unit 11 as the plurality of unit cells C are stacked on the seating plate 10. In other words, the connecting hole 100 is formed through along the stacking direction of the unit cell C, and the seating plate 10 may move along the guide unit 11 in a direction parallel to the stacking direction of the unit cell C.

Additionally, the guide unit 11 may be formed in plurality so as to be disposed at each corner portion of the seating plate 10. However, the shape of the guide unit 11 is not limited thereto, and the guide unit 11 may include various shapes formed through the seating plate 10 so that the seating plate 10 may move along.

As the seating plate 10 moves downward along the guide unit 11, the guide unit 11 may be formed to protrude upward from the seating plate 10. That is, the guide unit 11 may be formed in a vertical direction, and only the seating plate 10 may move downward in a state where the guide unit 11 maintains the posture and position thereof.

In other words, in a state where the top surface of the guide unit 11 forms the same plane as the top surface of the seating plate 10, the seating plate 10 moves downward along the guide unit 11, so that the top surface of the guide unit 11 may be positioned higher than the top surface of the seating plate 10.

The measurement unit 12 may measure the position information of the guide unit 11 and the position information of the unit cell C. For example, the measurement unit 12 may look at the unit cell C being stacked in a state of being located above the seating plate 10.

The position information of the guide unit 11 and the position information of the unit cell C measured by the measurement unit 12 may be utilized as information serving as a reference for the stacking operation of the stacking unit 13 to be described later.

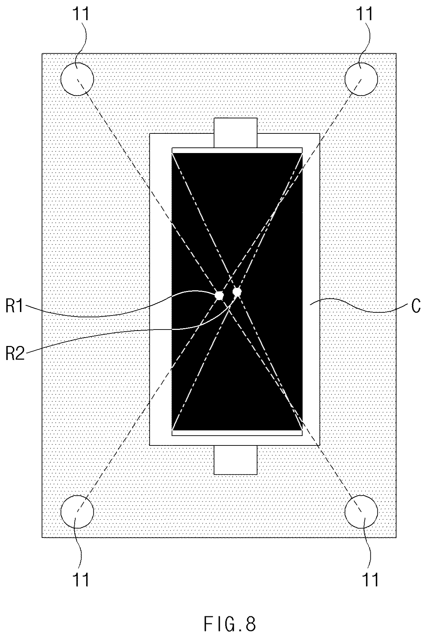

FIG. 8 is a plan view of a unit cell stacking device 1 according to an embodiment of the present disclosure.

Referring to FIG. 8, the measurement unit 12 may measure the center position information of the plurality of guide units 11. For example, the plurality of guide units 11 are formed through each corner of the seating plate 10, and the measurement unit 12 may calculate the center position based on the top surface of the plurality of guide units 11 in a state of being located above the guide units 11.

Specifically, the measurement unit 12 may measure a first reference point R1 at which a plurality of imaginary lines connecting the plurality of guide units 11 intersect. More specifically, the measurement unit 12 may measure an intersection point for the imaginary lines intersecting each other among the plurality of the imaginary lines connecting the plurality of guide units 11 as the first reference point R1, when viewed from above. In other words, the measurement unit 12 may calculate the central intersection point for the imaginary lines connecting the center points of the top surface of the guide units 11 and measure it as the first reference point R1.

Next, the measurement unit 12 may measure the center position information of the unit cell C. For example, the unit cell C is stacked in plurality, and the measurement unit 12 may measure the center position of the top surface of the plurality of unit cells C in a state of being located above the plurality of unit cells C. Specifically, the measurement unit 12 may measure a second reference point R2, which is a center point of the unit cell C located at the uppermost end among the plurality of unit cells C stacked on each other.

The stacking unit 13 may stack the unit cell C on the seating plate 10. For example, the stacking unit 13 may adsorb and grip the unit cell C located in a different space to move the unit cell C to the upper side of the seating plate 10. In this case, the stacking unit 13 may move horizontally while gripping the unit cell C to move the unit cell C to the upper side of the seating plate 10.

The stacking unit 13 may release the grip while placing the unit cell C on the upper side of the seating plate 10 to seat the unit cell C on the top surface of the seating plate 10. The stacking unit 13 may repeat such an operation to stack a plurality of unit cells C.

The stacking unit 13 may sequentially stack the plurality of unit cells C on the seating plate 10 so that the top surface height of the unit cell C located at the uppermost end among the plurality of unit cells C and the top surface height of the guide unit 11 are the same.

In other words, when the plurality of unit cells C are sequentially stacked on the seating plate 10, the top surface height of the unit cell C located at the uppermost end among the plurality of unit cells C and the top surface height of the guide unit 11 may be the same.

That is, the top surface height of the guide unit 11 is maintained constant, the speed at which the plurality of unit cells C are stacked by the stacking unit 13 and the speed at which the seating plate 10 descends are the same, and the top surface height of the unit cell C located at the uppermost end among the plurality of unit cells C may be maintained constant.

As a result, the top surface height of the guide unit 11 and the top surface height of the unit cell C located at the uppermost end among the plurality of unit cells C may be maintained constant in a state of being equal to each other.

The stacking unit 13 may stack the unit cell C on the seating plate 10 according to the position information of the guide unit 11 and the position information of the unit cell C measured by the measurement unit 12. For example, the unit cell stacking device 1 may further include a control unit 14 that controls the operation of the stacking unit 13 according to the position information of the guide unit 11 and the position information of the unit cell C measured by the measurement unit 12.

In other words, the control unit 14 may readjust the stacking operation of the stacking unit 13 by comparing the position information of the guide unit 11 and the position information of the unit cell C measured by the measurement unit 12. For example, the control unit 14 may determine whether the first reference point R1 and the second reference point R2 measured by the measurement unit 12 coincide, thereby determining whether the unit cell C is stacked in the correct position by the stacking unit 13. When the control unit 14 determines that the first reference point R1 and the second reference point R2 do not coincide, it may readjust the stacking operation of the stacking unit 13.

That is, the control unit 14 may control the stacking unit 13 so that the first reference point R1 and the second reference point R2 coincide. In other words, the stacking unit 13 may stack the unit cells C so that the first reference point R1 and the second reference point R2 coincide. In plain terms, the center position of the plurality of guide units 11 and the center position of the unit cells C stacked on the seating plate 10 may be the same.

In summary, as the plurality of unit cells C are stacked on the top surface of the seating plate 10 by the stacking unit 13, the seating plate 10 may descend along the guide unit 11. In this case, the top surface height of the guide unit 11 is maintained constant in a state where the guide unit 11 is fixed, and the speed at which the plurality of unit cells C are stacked and the speed at which the seating plate 10 descends are the same, so that the top surface height of the unit cell C located at the uppermost end among the plurality of unit cells C may also be maintained constant.

That is, the plurality of unit cells C may be stacked on the seating plate 10 so that the top surface of the unit cell C located at the uppermost end among the plurality of unit cells C and the top surface of the guide unit 11 form the same plane, the measurement unit 12 may measure the first reference point R1 based on the top surface of the guide unit 11, and may measure the second reference point R2 based on the top surface of the unit cell C located at the uppermost end among the plurality of unit cells C.

The plurality of unit cells C are stacked so that the first reference point R1 and the second reference point R2 coincide, but when the control unit 14 determines that the first reference point R1 and the second reference point R2 do not coincide, the control unit 14 may readjust the stacking operation of the stacking unit 13 so that the first reference point R1 and the second reference point R2 coincide.

According to this operation principle of the unit cell stacking device 1, even if the seating plate 10 descends while the plurality of unit cells C are stacked, the first reference point R1 may be calculated based on the top surface of the guide unit 11, thereby maintaining the position of the first reference point R1 constant. That is, regardless of the descending operation of the seating plate 10, the first reference point R1 and the second reference point R2 are maintained on the same plane, and thus the plurality of unit cells C may be stacked in a state where the alignment of the unit cells C remain constant.

As a result, even if the plurality of unit cells C are stacked on the seating plate 10, the position of a part serving as a reference for determining the stacking position of the unit cells C is maintained, so that the unit cell stacking device 1 may stack the unit cells C more precisely even if the seating plate 10 descends according to the stacking of the unit cells C. Additionally, the unit cell stacking device 1 may stack the unit cells C more precisely by readjusting the stacking operation when the unit cells C are not stacked in the correct position.

Hereinafter, a unit cell C stacking method according to another embodiment of the present disclosure will be described. A unit cell C stacking method according to another embodiment of the present disclosure relates to a method for stacking a plurality of unit cells C using the unit cell stacking device 1 according to an embodiment of the present disclosure described above. Some contents that overlap with the contents of the unit cell stacking device 1 according to an embodiment of the present disclosure described above will be omitted below.

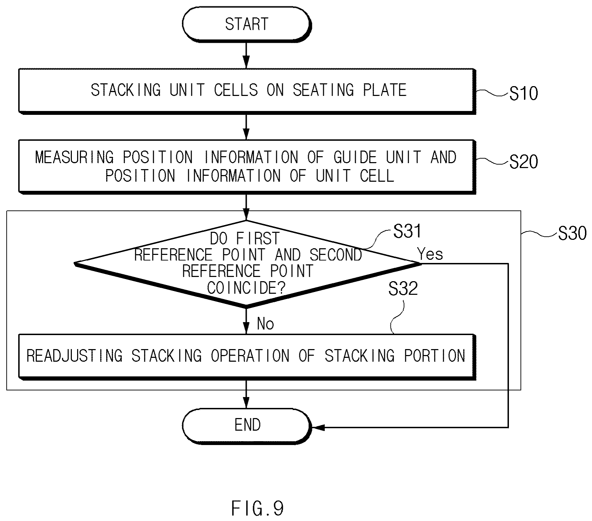

FIG. 9 is a flow chart of a unit cell C stacking method according to another embodiment of the present disclosure.

Referring to FIG. 9, a more precise unit cell C stacking process may be performed through a unit cell C stacking method according to another embodiment of the present disclosure. For example, through the unit cell C stacking method, the unit cell C may be stacked at a more accurate location based on the position information of the unit cell C and the position information of the part where the unit cell C is stacked.

The unit cell C stacking method may include a stacking step S10, a measurement step S20, and a control step S30.

In the stacking step S10, as the unit cells C are stacked in plurality on the seating plate 10 by the stacking unit 13, the seating plate 10 may move downward along the guide unit 11 connected through the seating plate 10.

In the stacking step S10, the seating plate 10 may move downward along the guide unit 11 through a connecting hole 100 through which the guide unit 11 is connected at each corner portion. As the seating plate 10 moves downward along the guide unit 11, the guide unit 11 may be formed to protrude upward from the seating plate 10.

In the measurement step S20, the measurement unit 12 may measure the position information of the guide unit 11 and the position information of the unit cell C. For example, the measurement unit 12 may look at the unit cell C being stacked in a state of being located above the seating plate 10.

In the measurement step S20, the measurement unit 12 may measure the center position information of the plurality of guide units 11. Specifically, the measurement unit 12 may measure a first reference point R1 at which a plurality of imaginary lines connecting the plurality of guide units 11 intersect. More specifically, the measurement unit 12 may measure an intersection point for the imaginary lines intersecting each other among the plurality of the imaginary lines connecting the plurality of guide units 11 as the first reference point R1, when viewed from above.

In the measurement step S20, the measurement unit 12 may measure the center position information of the unit cell C. Specifically, the measurement unit 12 may measure a second reference point R2, which is a center point of the unit cell C located at the uppermost end among the plurality of unit cells C stacked on each other.

In the control step S30, the control unit 14 may control the operation of the stacking unit 13 according to the position information of the guide unit 11 and the position information of the unit cell C measured in the measurement step S20. The control unit 14 may readjust the stacking operation of the stacking unit 13 by comparing the position information of the guide unit 11 and the position information of the unit cell C measured by the measurement unit 12.

The control step S30 may include a judgment step S31 and an adjustment step S32.

In the judgment step S31, the control unit 14 may determine whether the first reference point R1 and the second reference point R2 coincide. In other words, the control unit 14 may receive information on the first reference point R1 and the second reference point R2 measured by the measurement unit 12 and may determine whether the first reference point R1 and the second reference point R2 coincide in terms of location.

When the control unit 14 determines in the judgment step S31 that the first reference point R1 and the second reference point R2 do not coincide, the control unit 14 may readjust the stacking operation of the stacking unit 13 in the adjustment step S32. That is, the control unit 14 may control the stacking unit 13 so that the first reference point R1 and the second reference point R2 coincide. In other words, the stacking unit 13 may stack the unit cells C so that the first reference point R1 and the second reference point R2 coincide by the control unit 14. In plain terms, the center position of the plurality of guide units 11 and the center position of the unit cells C stacked on the seating plate 10 may be the same.

The above description is merely an illustrative description of the technical ideas of the present disclosure, and various modifications and variations will be possible by those having ordinary skill in the technical field pertaining to the present disclosure without departing from the essential characteristics of the present disclosure.

Therefore, the embodiments disclosed in the present disclosure are not intended to limit the technical ideas of the present disclosure, but for illustrative purposes, and the scope of the technical ideas of the present disclosure is not limited by these embodiments.

The scope of protection of the present disclosure should be interpreted in accordance with the claims below, and all technical ideas within the scope equivalent thereto should be construed as being included in the scope of the present disclosure.

### [List of Reference Numerals]

1: Unit cell stacking device
10: Seating plate
11: Guide unit
12: Measurement unit
13: Stacking unit
14: Control unit
100: Connecting hole
C: Unit cell
R1: First reference point
R2: Second reference point
S10: Stacking step
S20: Measurement step
S30: Control step
S31: Judgement step
S32: Adjustment step

## Claims

1. A unit cell stacking device comprising:
a seating plate on which a plurality of unit cells are sequentially seated so as to be stacked on each other;
a guide unit connected to the seating plate and guiding a downward movement of the seating plate;
a measurement unit measuring a position information of the guide unit and a position information of a unit cell; and
a stacking unit stacking the unit cells on the seating plate according to the position information of the guide unit and the position information of the unit cell measured by the measurement unit.

2. The unit cell stacking device according to claim 1,
wherein the seating plate includes a connecting hole formed through each corner portion, and
the guide unit is connected through the connecting hole.

3. The unit cell stacking device according to claim 2,
wherein as the plurality of unit cells are stacked on the seating plate, the seating plate moves downward along the guide unit.

4. The unit cell stacking device according to claim 3,
wherein the guide unit is formed as a plurality so as to be disposed at each corner portion of the seating plate, and
the measurement unit measures a first reference point at which a plurality of imaginary lines connecting the plurality of guide units intersect and measures a second reference point, which is a center point of the unit cell located at an uppermost end among the plurality of unit cells stacked on each other.

5. The unit cell stacking device according to claim 4,
wherein the stacking unit stacks the unit cells so that the first reference point and the second reference point coincide.

6. The unit cell stacking device according to claim 4, further comprising:
a control unit that controls an operation of the stacking unit according to the position information of the guide unit and the position information of the unit cell measured by the measurement unit.

7. The unit cell stacking device according to claim 6,
wherein the control unit determines whether the first reference point and the second reference point coincide.

8. The unit cell stacking device according to claim 6,
wherein the control unit readjusts a stacking operation of the stacking unit when the control unit determines that the first reference point and the second reference point do not coincide.

9. The unit cell stacking device according to claim 3,
wherein as the seating plate moves downward along the guide unit, the guide unit is formed to protrude upward from the seating plate.

10. The unit cell stacking device according to claim 9,
wherein the stacking unit sequentially stacks the plurality of unit cells on the seating plate so that a top surface height of the unit cell located at an uppermost end among the plurality of unit cells and a top surface height of the guide unit are the same.

11. The unit cell stacking device according to claim 3,
wherein a top surface height of the guide unit is maintained constant.

12. The unit cell stacking device according to claim 2,
wherein the connecting hole is formed through along a stacking direction of the unit cells, and
the seating plate moves along the guide unit in a direction parallel to the stacking direction of the unit cells.

13. The unit cell stacking device according to claim 1,
wherein the guide unit is formed as a plurality, and
a center position of the plurality of guide units and a center position of the unit cells stacked on the seating plate are the same.

14. A unit cell stacking method comprising:
a stacking step in which as unit cells are stacked in plurality on a seating plate by a stacking unit, the seating plate moves downward along a guide unit connected through the seating plate;
a measurement step in which a measurement unit measures a position information of the guide unit and a position information of a unit cell; and
a control step in which a control unit controls an operation of the stacking unit according to the position information of the guide unit and the position information of the unit cell measured in the measurement step.

15. The unit cell stacking method according to claim 14,
wherein in the stacking step, the seating plate moves downward along the guide unit through connecting hole through which the guide unit is connected at each corner portion.

16. The unit cell stacking method according to claim 15,
wherein in the measurement step, the measurement unit measures a first reference point at which a plurality of imaginary lines connecting the plurality of guide units intersect, and measures a second reference point, which is a center point of the unit cell located at an uppermost end among the plurality of unit cells stacked on each other.

17. The unit cell stacking method according to claim 16,
wherein the control step comprises:
a judgment step in which the control unit determines whether the first reference point and the second reference point coincide; and
an adjustment step in which the control unit readjusts a stacking operation of the stacking unit when the control unit determines that the first reference point and the second reference point do not coincide in the judgment step.
